(19) Europäisches Patentamt / European Patent Office / Office européen des brevets

(11) **EP 1 784 910 B1**

(12) **EUROPÄISCHE PATENTSCHRIFT**

(45) Veröffentlichungstag und Bekanntmachung des Hinweises auf die Patenterteilung:
**13.10.2010   Patentblatt 2010/41**

(51) Int Cl.:
*H02M 3/158* (2006.01)          *H02J 7/14* (2006.01)
*H02H 9/04* (2006.01)

(21) Anmeldenummer: 05776148.8

(22) Anmeldetag: **10.08.2005**

(86) Internationale Anmeldenummer:
**PCT/EP2005/053943**

(87) Internationale Veröffentlichungsnummer:
**WO 2006/021511 (02.03.2006 Gazette 2006/09)**

(54) **SPANNUNGSREGLER MIT ÜBERSPANNUNGSSCHUTZ**

VOLTAGE REGULATOR WITH OVER-VOLTAGE PROTECTION

REGULATEUR DE TENSION A PROTECTION CONTRE LES SURTENSIONS

(84) Benannte Vertragsstaaten:
**DE FR IT SE**

(30) Priorität: **27.08.2004   DE 102004041511**

(43) Veröffentlichungstag der Anmeldung:
**16.05.2007   Patentblatt 2007/20**

(73) Patentinhaber: **ROBERT BOSCH GMBH
70442 Stuttgart (DE)**

(72) Erfinder:
• **WOLF, Gert
  71563 Affalterbach (DE)**
• **MEYER, Reinhard
  74321 Bietigheim-Bissingen (DE)**

(56) Entgegenhaltungen:
**EP-A- 0 500 381          DE-A1- 4 439 967
DE-A1- 10 262 000     DE-A1- 19 859 036**

EP 1 784 910 B1

**Beschreibung**

Stand der Technik

Die Erfindung geht aus von einem Spannungsregler mit Überspannungsschutz nach der Gattung des Hauptanspruchs und betrifft insbesondere einen Spannungsregler, der in einem Fahrzeugbordnetz mit einem Generator mit freier Spannung zusammenwirkt.

Kraftfahrzeuggeneratoren sind üblicherweise so ausgelegt, dass sie die Leistungsanforderungen innerhalb einer bestimmten Spannungsebene, beispielsweise einer Spannungsebene von 14 Volt und eines Drehzahlkollektivs möglichst gut erfüllen. Dazu wird der Generator mit Hilfe eines Generatorreglers so geregelt, dass die im Prinzip drehzahlabhängige Ausgangsspannung über den gesamten möglichen Drehzahlbereich konstant gehalten wird. Bei Generatoren, die für eine erste Betriebsspannung von beispielsweise 14 Volt ausgelegt sind, könnte auf einer zweiten Betriebsspannung, die höher liegt, als die erste Betriebsspannung, eine höhere Leistung bei deutlich verbessertem Wirkungsgrad erzielt werden. Die sogenannte Angehdrehzahl, also die Drehzahl, ab der der Generator Leistung abgeben kann, erhöht sich allerdings mit steigender Betriebsspannung ebenfalls.

Ausgehend von diesen bekannten Zusammenhängen wird in der DE-OS 198 59 036 ein Bordnetz für ein Kraftfahrzeug beschrieben, bei dem ein Generator eingesetzt wird, dessen Ausgangsspannung bzw. Regelspannung veränderbar ist und beispielsweise zwischen 14 Volt und 42 Volt frei wählbar ist. Der Generator ist dabei über einen Längsregler mit dem Bordnetz, das eine konstante Spannung von beispielsweise 14 Volt benötigt, verbunden. Zu diesem Bordnetz gehört auch die Batterie mit der Nennspannung von 12 Volt, die mit etwa 14 Volt geladen werden soll. Verbraucher, die auch mit einer höheren Spannung als 14 Volt betrieben werden können, beispielsweise eine elektrische Heizung, ein Motorkühler-Gebläse u.s.w., sind generatorseitig angeschlossen und werden mit variabler Spannung von 14 bis 42 Volt betrieben.

Es ist bekannt, dass ein Generator, der üblicher Weise als Drehstromgenerator aufgebaut ist, bei plötzlichen Lastabschaltungen Überspannungen erzeugen kann. Daher ist es üblich, einem in einem Fahrzeugbordnetz befindlichen Generator einen sogenannten Load-Dump-Schutz zuzuordnen, der beispielsweise Zenerdioden umfasst und Überspannungen in ihrer Wirkung verringert und verhindert, dass die Überspannungen zu Schäden führen können. Ein Beispiel für einen Generator mit Zenerdioden wird in der DE-OS 101 18 846 gezeigt.

Werden in einem Mehrspannungsbordnetz, bei dem der Generator mit freier Spannung betrieben wird, Verbraucher plötzlich abgeschaltet, kann dies zu einem hohen Spannungsimpuls führen, der beispielsweise bei einem Betrieb mit 42 Volt dazu führen kann, dass die Zenerdioden zerstört werden. Die Zenerdioden sind bei derzeitigen Load-Dump-Schutzschaltungen für die Leistung in Vorwärtsrichtung ausgelegt und können daher nur einen Teil des Load-Dump-Stromes übernehmen, ohne selbst geschädigt zu werden. Bei einer vollständigen Lastabschaltung bei Generatorbetrieb im höheren Spannungsbereich wäre eine Schädigung der Zenerdioden wahrscheinlich.

Es wird daher in der DE-OS 101 18 846 in Verbindung mit einem Mehrspannungsbordnetz eine spezielle Verschaltung von Zenerdioden vorgeschlagen, bei der im Load-Dump-Fall die Zenerdioden zumindest teilweise in ihrem Durchbruch betrieben wird, also im Rückwärtsbetrieb. Die Begrenzung der Spannung wird hierbei hauptsächlich durch die Zenerspannung derjenigen Dioden bestimmt, die in Rückwärtsbetrieb betrieben werden.

Eine Alternative oder Ausgestaltung zu den vorstehend genannten aus dem Stand der Technik bekannten Lösungen könnte darin bestehen, größere Dioden-Chipflächen durch Einsatz größerer Dioden oder Parallelschaltung mehrerer Dioden zu erhalten oder ein Load-Dump-Schutzgerät einzusetzen das hochsperrenden Dioden enthält. Mittels eines Lastmanagements könnten spannungsempfindliche Verbraucher abgeschaltet werden, sofern ein Load-Dump droht. Ebenso könnten spannungsunempfindliche Verbraucher ab Erreichen einer Spannungsschwelle gezielt zugeschaltet werden.

Aufgabe der Erfindung

Aufgabe der Erfindung ist es, die bei plötzliche Abschalten starker elektrischer Verbraucher (Load-Dump) auftretenden Spannungsspitzen insbesondere auch in einem Mehrspannungsbordnetz mit wenigstens zwei Spannungsebenen, bei dem auf der Seite mit der freien, also der höheren Spannung keine Batterie vorhanden ist, abzuschwächen oder ganz zu kompensieren und so einen Load-Dump-Schutz zu erhalten. Die freie Spannung wird nach den Erfordernissen der Verbraucher zwischen einer ersten Spannungsebene $U_{G1min}$ von beispielsweise 14 Volt und einer zweiten (oberen) Spannungsebene $U_{G1max}$ von beispielsweise 42 Volt auf einen vorgebbaren Sollspannungswert $U_{GFsoll}$ geregelt, für den gilt:

$$U_{G1min} \le U_{GFsoll} \le U_{G1max}$$

Die Höhe der Spannung kann beispielsweise von einem Steuergerät oder vorzugsweise vom Spannungsregler (DC/DC-Wandler) oder vom Längsregler usw. vorgegeben werden. Gelöst wird die Aufgabe des Load-Dump-Schutzes durch einen Spannungsregler, vorzugsweise einen Längsregler mit den Merkmalen des Anspruchs 1.

Aus der DE 102 62 000 A1 ist ein Fahrzeugbordnetz bekannt, bei dem ein Spannungsregler die beiden Spannungsebenen des Bordnetzes miteinander verbindet. Eingangsseitig ist dieser Spannungswandler mit einem Generator verbunden und ausgangsseitig mit einer Batterie, sowie mit wenigstens einer Last. Der Spannungsregler ist so ausgestaltet, dass er ausgangsseitig eine geregelte Spannung abgibt, die der üblichen Bordnetzspannung entspricht. Der Spannungsregler weist eine Elektronik auf, die vorgebbare Ansprechkriterien definiert und das Erreichen dieser Ansprechkriterien überprüft. Bei Erreichen wenigstens eines Ansprechkriteriums ändert der Spannungsregler seine Regelcharakteristik und erhöht eingangsseitig die Spannung. Zusätzlich verändert der Spannungsregler ausgangsseitig die Spannung in Abhängigkeit von der Temperatur der im Bordnetz eingesetzten Batterie.

Vorteile der Erfindung

Der Vorteil der Erfindung besteht darin, die beim plötzlichen Abschalten starker Verbraucher auftretende Load-Dump-Energie im Bordnetz kostengünstig ohne zusätzlichen Verschaltungsaufwand zu begrenzen und Schädigungen oder Vorschädigungen an Überspannungsschutzschaltungen, beispielsweise Zenerdioden oder anderer Bordnetzkomponenten wie Generatorregler, Lastregler, Spannungsregler, Steuergeräte usw. zu vermeiden bzw. zu reduzieren. Besonders vorteilhaft ist dabei, dass gerade auch die Load-Dump-Energie des freien Spannungsbordnetzes zuverlässig begrenzt werden kann.

Erzielt werden diese Vorteile, indem zwischen dem Generator und dem Teil des Bordnetzes, der mit herkömmlichen Bordnetzkomponenten in 14 Volt Technik aufgebaut wird und der durch Einsatz eines 12 Volt Bleiakkumulators geregelte feste Spannungen benötigt, ein spezieller Spannungsregler, insbesondere Längsregler eingesetzt wird, der Voraussetzungen aufweist, die es ermöglichen, bestimmte Schaltvorgänge auszulösen. Der Spannungsregler weist dazu in vorteilhafter Weise eine Elektronik und vorteilhafter Weise einen Mikroprozessor auf, der Schaltvorgänge bei bestimmten vorgebbaren Ansprechkriterien auslöst.

Weitere Vorteile der Erfindung werden durch die in den Unteransprüchen angegebenen Merkmale erzielt. So können die Ansprechkriterien sowohl für die mit freier Spannung betriebene Seite des Bordnetzes, als auch für die mit geregelter Spannung betriebene Seite festgesetzt werden. Vorteilhafte Ansprechkriterien für den Spannungsregler sind:

> Überschreiten einer gesetzten Spannungsschwelle auf der Seite mit freier Spannung,

> Überschreiten bestimmter Spannungssteilheiten bzw. -Änderungen, Ankündigung eines Lastabwurfs durch ein entsprechendes Steuergerät.

Nach Erfüllung eines der Anspruchkriterien werde in besonders vorteilhafter Weise auf der Niederspannungsseite bestimmte Maßnahmen eingeleitet, die einen Energieabbau auf der Seite mit freier Spannung erhöhen. Dabei wird beispielsweise die Spannung um einen vorgebbaren Wert erhöht, der so gewählt wird, dass keine negativen Auswirkungen auf die Niederspannungsverbraucher auftreten. Durch den dann höheren Strom auf der Niederspannungsseite kann die anfallende Load-Dump-Energie abgebaut werden.

Nachdem kein Ansprechkriterium für den Spannungsregler mehr erfüllt ist, wird die Spannung auf der Niederspannungsseite in vorteilhafter Weise wieder reduziert und an dann bestehende Erfordernisse angepasst.

Zeichnung

In der einzigen Figur der Zeichnung ist eine Prinzipdarstellung eines Bordnetzes mit zwei Spannungsebenen und einem dazwischen angeordneten Spannungsregler dargestellt. Anhand dieser Prinzipdarstellung wird in der folgenden Beschreibung die Funktion der Erfindung näher erläutert.

Beschreibung

In der einzigen Figur ist eine Prinzipdarstellung eines zwei unterschiedliche Spannungsebenen aufweisenden Fahrzeugbordnetzes dargestellt. Die beiden Spannungsebenen sind beispielsweise eine 14-Volt-Ebene mit einer geregelten Spannung und eine Spannungsebene mit einer Spannung geregelten Spannung zwischen zwei Spannungsebenen von beispielsweise 14 Volt und 42 Volt. Die Erzeugung der elektrischen Energie erfolgt mit Hilfe eines mittels eines Generatorreglers R geregelten Generators G, dessen Regelspannung zwischen zwei Spannungsebenen, beispielsweise zwischen 14 Volt und 42 Volt frei wählbar ist. Die Regelspannungsvorgabe erfolgt vorzugsweise durch ein Steuergerät oder beispielsweise durch den Spannungsregler selbst oder durch einen Längsregler usw. Gleichspannungswandler (DC/DC-Wandler) über eine analoge oder digitale Schnittstelle zwischen dem Generatorregler und dem Steuergerät bzw. dem Spannungsregler.

An den Generator G angeschlossen ist eine Last L1, die alle Verbraucher umfasst, die mit variabler Spannung versorgt werden können. Diese Verbraucher umfassen beispielsweise eine elektrische Heizung, ein Motorkühler-Gebläse sowie weitere Verbraucher, die spannungsunempfindlich sind und mit möglichst hoher Spannung betrieben werden sollen, bzw. deren Abgabeleistung durch Vorgabe der Spannungsebene geregelt werden soll. Die Zuschaltung dieser Verbraucher L1 erfolgt in üblicher Weise durch Betätigung eines zugeordneten, in der Prinzipdarstellung mit S1 bezeichneten Schalters. Die Ansteuerung einzelner Schalter S1 kann mittels geeigneter Ansteuersignale A1 vom Spannungsregler L erfolgen. Zur Stabilisierung der freien Spannungsseite kann ein Kondensator parallel zum Generator G geschaltet sein, vorzugsweise ein Zweischichtkondensator.

Der Generator G bzw. die generatorseitig liegende Spannungsebene mit freier Spannung ist über einen Spannungsregler L mit der zweiten Spannungsebene verbunden. Der Generator G speist dabei den Spannungsregler L mit einer Spannung, die zwischen 14 Volt und 42 Volt beträgt. Die Spannungsebene, die eine geregelte Spannung von beispielsweise 14 Volt aufweist, umfasst neben der Fahrzeugbatterie B, üblicherweise eine Bleibatterie, noch die Last L2. Die Last L2 umfasst alle elektrischen Verbraucher, die mit einer geregelten Spannung versorgt werden sollen. Die Verbraucher können wiederum durch einen jeweils zugeordneten Schalter S2 ein- bzw. ausgeschaltet werden, beispielsweise durch Zuführung von Ansteuersignalen A2, die vom Spannungsregler L erzeugt werden können.

Der Spannungsregler, insbesondere ein Längsregler L ist beispielsweise ein elektronischer Regler, der mit einer Intelligenz ausgestattet ist, die insbesondere einen Mikroprozessor umfasst und aus zugeführten oder selbst erfassten Informationen Ansteuersignale A1, A2 sowie gegebenenfalls weitere bildet. Diese Informationen sind beispielsweise die beiden Istspannungswerte U1, U2 auf der Primär- bzw. der Sekundärseite des Bordnetzes. Diese Spannungsistwerte U1, U2 werden vom Längsregler selbst erfasst oder werden mit Hilfe geeigneter, in der Zeichnung nicht dargestellter Spannungsmesser ermittelt und dem Längsregler zugeführt. Weitere Größen, die vom Längsregler erfasst werden können oder dem Längsregler zugeführt werden können, sind an vorgebbaren Stellen gemessene Ströme. Beispielhaft sind Ströme I1 bzw. I2 angegeben, die an wählbaren Stellen in den beiden Spannungsebenen gemessen werden. Eine weitere Information, die dem Längsregler L zugeführt werden kann ist der von einem weiteren Steuergerät angekündigte Lastabwurf, der mit LA bezeichnet ist.

Der Spannungsregler L hat also sowohl eine Spannungserfassung im 14V Bordnetz als auch eine Spannungserfassung im 42V Bordnetz und zusätzlich wenigstens eine Stromerfassung. Aus diesen Größen, die im Längsregler vorliegen müssen, damit seine maximale Leistungsaufnahme nicht überschritten wird, kann auch der erfindungsgemäße Überspannungsschutz realisiert werden, für ein in der Figur dargestellten Spannungsreglersystem für ein Bordnetz mit dem Spannungsregler L. Es können dabei die in einem derartigen Bordnetz auftretenden Probleme zuverlässig vermieden werden. Der Spannungsregler L gibt dabei die Spannungsebene im 42V Bordnetz vor. Wird diese um ein bestimmtes Delta überschritten oder wird ein fester Spannungswert von beispielsweise 50V überschritten, reagiert der Regler in der im folgenden beschriebenen Weise.

Bei einem Load-Dump, also bei plötzlichen Abschaltungen eines Hochstromverbrauchers, beispielsweise einer elektrischen Heizung im 14-42-Volt-Bordnetz, können hohe Spannungsspitzen auftreten, da in diesem Bordnetzbereich zwischen Generator und Längsregler keine Batterie zur Dämpfung zur Verfügung steht. Dadurch ist ohne Zusatzmaßnahmen eine Schädigung der Bordnetzkomponenten möglich. Dabei sind sowohl Generatorregler, Gleichrichterdioden, Lastregler, Längsregler, Steuergeräte u.s.w. betroffen. Um die Auswirkungen des Load-Dump deutlich abzuschwächen bzw. zu kompensieren, kann mit Hilfe eines geeigneten Reglers wie folgt vorgegangen werden:

1. Definition von Ansprechkriterien
Es werden eine oder mehrere Ansprechkriterien für den Spannungsregler definiert. Solche Kriterien sind beispielsweise das Überschreiten einer gesetzten Spannungsschwelle von beispielsweise 50 Volt auf der Bordnetzseite mit der freien Spannung, das Überschreiten bestimmter Spannungssteilheiten oder die Ankündigung eines Lastabwurfs bzw. einer Lastabschaltung LA durch ein entsprechendes weiteres Steuergerät. Wird eines dieser Ansprechkriterien vom Spannungsregler L erkannt, muss er entsprechende Ansteuerungen vornehmen und beispielsweise wenigstens eines der Ansteuersignale A1 und/oder A2 abgeben.

2. Regelung auf der Niederspannungsseite
Der Spannungsregler L sollte bei Erfüllung eines Ansprechkriteriums nach 1. die Spannungslage auf der 14-Volt-Seite erhöhen, beispielsweise um 0.5 Volt von 13,5 Volt auf 14 Volt. Hierdurch wird ein größerer Strom über den Spannungsregler L in das 14-Volt-Bordnetz übertragen und ein Teil der Load-Dump-Energie abgebaut.

3. Wiederherstellung der normalen 14-Volt-Spannung
Nachdem vom Spannungsregler L aus den ihm zugeführten oder von ihm ermittelten Informationen erkannt wird, dass kein Ansprechkriterium mehr vorliegt, wird im 14-Volt-Bordnetz bzw. der entsprechenden Spannungsebene die Spannung wieder reduziert auf den ursprüngliche Wert.

Durch diese Vorgehensweise kann die Load-Dump-Energie des freien Spannungsbordnetzes kostengünstig ohne zusätzlichen Verschaltungsaufwand begrenzt werden, indem diese Energie auf die 14-Volt-Seite übertragen wird. Damit können Vorschädigungen der Zenerdioden sowie anderer Bordnetzkomponenten vermieden bzw. reduziert werden.

Je nach Ausgestaltung der Erfindung kann der Spannungsregler L, beispielsweise ein Längsregler, als verlustarmer Tiefsetzsteller, der eine Spannungswandlung von hoch nach niedrig durchführt oder als verlustarmer Hochsetzsteller, der niedrige Spannungen erhöht, ausgeführt sein.

Die Erfindung kann beispielsweise in Bordnetzen mit folgenden speziellen Bedingungen eingesetzt werden:

Eingangsseitig, auf der dem Generator G zugewandten Seite des Spannungsreglers L soll die Spannung in einem Bereich von $U_{G1min}$ = 14 Volt bis $U_{G1max}$ = 42 Volt liegen und die ausgangsseitige Spannungsebene in einem Bereich von 14 Volt. Oder eingangsseitig 28 Volt bis 42 Volt und ausgangsseitig 28 Volt. Oder eingangsseitig 14 Volt und ausgangsseitig 42 Volt. Die freie Spannung kann dann nach den Erfordernissen der Verbraucher zwischen einer ersten Spannungsebene $U_{G1min}$ von beispielsweise 14 Volt und einer zweiten (oberen) Spannungsebene $U_{G1max}$ von beispielsweise 42 Volt auf einen vorgebbaren Sollspannungswert $U_{GFsoll}$ geregelt, für den gilt:

$$U_{G1min} <= U_{GFsoll} <= U_{G1max}.$$

Wobei die Höhe der Spannung von einem Steuergerät oder dem Spannungsregler vorgegeben werden kann.

Für die Bedeutung der Bezugszeichen bzw. der verwendeten Symbole gilt folgender Zusammenhang:

G: Generator mit freier geregelter Spannung
R: Generatorregler mit digitaler oder analoger Schnittstelle zur Spannungsvorgabe
L: Spannungsregler, vorzugsweise Längsregler
L1: Zusammenfassung aller Lasten, die mit variabler Spannung betrieben werden können
S1: Zusammenfassung aller Schalter, die Lasten mit variabler Spannung schalten
U1: freie Spannung
I1: Strom der freien Spannungsseite in den Spannungsregler
A1: Ansteuersignale für S1
C: Optionale Kondensator, vorzugsweise Zweischichtkondensator
B: 12 Volt bzw. 28 Volt Batterie
L2: Zusammenfassung aller Lasten, die mit konstanter Spannung betrieben werden
S2: Zusammenfassung aller Schalter, die Lasten mit konstanter Spannung schalten
U2: geregelte, vorzugsweise konstante Spannung
I2: Strom aus dem Spannungsregler auf der auf konstante Spannung geregelten Seite
A2: Ansteuersignale für S2
LA: Signal, das Lastabschaltung ankündigt und z.B. von einem anderen Steuergerät kommt.

**Patentansprüche**

1. Spannungsregler (L) mit Überspannungsschutz in einem mindestens zwei Spannungsebenen umfassenden Bordnetz, bei dem ein Spannungsregler (L) zwischen den beiden Spannungsebenen eingesetzt wird und eingangsseitig mit einem Generator mit freier Spannung (U1) verbunden ist und ausgangsseitig mit einer Batterie sowie mit wenigstens einer Last und der Spannungsregler so ausgestaltet ist, dass er ausgangsseitig eine geregelte Spannung (U2) abgibt, wobei der Spannungsregler eine Elektronik umfasst, die vorgebbare Ansprechkriterien definiert und das Erreichen dieser Ansprechkriterien überprüft und bei Erreichen wenigstens eines Ansprechkriteriums seine Regelcharakteristik ändert, **dadurch gekennzeichnet, dass** der Spannungsregler (L) ausgangsseitig eine Erhöhung der Spannung (U2) vornimmt, wobei als Ansprechkriterien für den Regler das Überschreiten einer gesetzten Spannungsschwelle auf der freien Spannungsseite, das Überschreiten bestimmter Spannungssteilheiten auf der freien Spannungsseite oder die Ankündigung einer Lastabschaltung oder eines Lastabwurfs durch ein entsprechendes Steuergerät definiert wird.

2. Spannungsregler nach Anspruch 1, **dadurch gekennzeichnet, dass** der Spannungsregler (L) als Längsregler ausgeführt ist.

3. Spannungsregler nach Anspruch 1, **dadurch gekennzeichnet, dass** der Spannungsregler (L) als verlustarmer Tiefsetzsteller ausgeführt ist.

4. Spannungsregler nach Anspruch 1, **dadurch gekennzeichnet, dass** der Spannungsregler (L) als verlustarmer Hochsetzsteller ausgeführt ist.

5. Spannungsregler nach einem der vorhergehenden Ansprüche, **dadurch gekennzeichnet, dass** auf der Ausgangsseite des Reglers die Spannung (U2) um etwa ½ Volt erhöht wird.

6. Spannungsregler nach einem der vorhergehenden Ansprüche 1 bis 3, **dadurch gekennzeichnet, dass** die Spannung auf der Ausgangsseite (U2) so lange erhöht wird, bis die Spannung auf der Eingangsseite (U1) einen vorgebbaren Wert von beispielsweise 45 Volt wieder unterschritten hat.

7. Spannungsregler nach einem der vorhergehenden Ansprüche, **dadurch gekennzeichnet, dass** eine vorgebbare maximale Spannung auf der Ausgangsseite (U2) nicht unterschritten wird, wobei diese maximale Spannung vorzugsweise 16,0 Volt beträgt.

8. Spannungsregler nach einem der vorhergehenden Ansprüche, **dadurch gekennzeichnet, dass**, nachdem kein Ansprechkriterium mehr vorliegt, die Ausgangsspannung (U2) auf der Ausgangsseite des Längsreglers wieder auf den normalen Wert reduziert wird.

9. Spannungsregler nach einem der vorhergehenden Ansprüche, **dadurch gekennzeichnet, dass** der Längsregler Ansteuersignale abgibt, vorgebbare Schalter (S1, S2) öffnen oder schließen und damit zugehörige Verbraucher zu oder abschalten, wenn die zugehörigen Kriterien erfüllt sind.

10. Spannungsregler nach einem der vorhergehenden Ansprüche, **dadurh gekennzeichnet, dass** die eingangsseitig anliegende Spannungsebene (U1) in einem Bereich von 14-42 Volt und die ausgangsseitige Spannungsebene (U2) in einem Bereich von 14 Volt liegt.

11. Spannungsregler nach einem der vorhergehenden Ansprüche, **dadurch gekennzeichnet, dass** die eingangsseitig anliegende Spannungsebene (U1) in einem Bereich von 28 - 42 Volt und die ausgangsseitige Spannungsebene (U2) in einem Bereich von 28 Volt liegt.

12. Spannungsregler nach einem der vorhergehenden Ansprüche, **dadurch gekennzeichnet, dass** die eingangsseitig anliegende Spannungsebene (U1) in einem Bereich von 14 Volt und die ausgangsseitige Spannungsebene (U2) in einem Bereich von 42 Volt liegt.

## Claims

1. Voltage regulator (L) with overvoltage protection in an on-board power supply system which has at least two voltage levels and in which a voltage regulator (L) is inserted between the two voltage levels, is connected on the input side to a generator with a free voltage (U1) and is connected on the output side to a battery and to at least one load, and the voltage regulator is designed such that it emits a regulated voltage (U2) on the output side, with the voltage regulator having electronics which define predeterminable response criteria and check when these response criteria are satisfied, and change their control characteristic when at least one response criterion is satisfied, **characterized in that** the voltage regulator (L) increases the voltage (U2) on the output side, with response criteria for the regulator being defined as overshooting a set voltage threshold on the free voltage side, overshooting specific voltage gradients on the free voltage side, or notification of load disconnection or of load shedding by an appropriate controller.

2. Voltage regulator according to Claim 1, **characterized in that** the voltage regulator (L) is in the form of a series regulator.

3. Voltage regulator according to Claim 1, **characterized in that** the voltage regulator (L) is in the form of a low-loss step-down converter.

4. Voltage regulator according to Claim 1, **characterized in that** the voltage regulator (L) is in the form of a low-loss step-up converter.

5. Voltage regulator according to one of the preceding claims, **characterized in that** the voltage (U2) on the output side of the regulator is increased by about 0.5 volts.

6. Voltage regulator according to one of the preceding Claims 1 to 3, **characterized in that** the voltage on the output side (U2) is increased until the voltage on the input side (U1) has once again fallen below a predeterminable value of, for example, 45 volts.

7. Voltage regulator according to one of the preceding claims, **characterized in that** a predeterminable maximum voltage is not undershot on the output side (U2), with this maximum voltage preferably being 16.0 volts.

8. Voltage regulator according to one of the preceding claims, **characterized in that** when response criterion is no longer present, the output voltage (U2) on the output side of the series regulator is once again reduced to the normal value.

9. Voltage regulator according to one of the preceding claims, **characterized in that** the series regulator outputs drive signals, predeterminable switches (S1, S2) open and close and therefore connect or disconnect associated loads when the associated criteria are satisfied.

10. Voltage regulator according to one of the preceding claims, **characterized in that** the voltage level (U1) which is present on the input side is in a range from 14 to 42 volts, and the voltage level (U2) on the output side is in the region of 14 volts.

11. Voltage regulator according to one of the preceding claims, **characterized in that** the voltage level (U1) which is present on the input side is in a range from 28 to 42 volts, and the voltage level (U2) on the output side is in the region of 28 volts.

12. Voltage regulator according to one of the preceding claims, **characterized in that** the voltage level (U1) which is present on the input side is in the region of 14 volts, and the voltage level (U2) on the output side is in the region of 42 volts.

**Revendications**

1. Régulateur de tension (L) comprenant une protection contre les surtensions dans un réseau de bord comprenant au moins deux niveaux de tension, avec lequel un régulateur de tension (L) est utilisé entre les deux niveaux de tension et qui est relié du côté de l'entrée avec un générateur à tension libre (U1) et qui, du côté de la sortie, est équipé d'une batterie et au moins d'une charge et du régulateur de tension de telle sorte qu'il délivre du côté de la sortie une tension régulée (U2), le régulateur de tension comprenant une électronique qui définit des critères de réaction pouvant être prédéfinis et contrôle si ces critères sont réunis et modifie sa caractéristique de régulation lorsqu'au moins l'un des critères de réaction est vérifié, **caractérisé en ce que** le régulateur de tension (L) effectue du côté de la sortie une élévation de la tension (U2), les critères de réaction définis pour le régulateur étant le dépassement d'un seuil de tension fixé du côté de la tension libre, le dépassement de pentes de tension données du côté de la tension libre ou la notification d'une déconnexion de la charge ou d'un rejet de la charge par un module de commande correspondant.

2. Régulateur de tension selon la revendication 1, **caractérisé en ce que** le régulateur de tension (L) est réalisé sous la forme d'un régulateur linéaire.

3. Régulateur de tension selon la revendication 1, **caractérisé en ce que** le régulateur de tension (L) est réalisé sous la forme d'un abaisseur de tension à faibles pertes.

4. Régulateur de tension selon la revendication 1, **caractérisé en ce que** le régulateur de tension (L) est réalisé sous la forme d'un élévateur de tension à faibles pertes.

5. Régulateur de tension selon l'une des revendications précédentes, **caractérisé en ce que** la tension (U2) est élevée d'environ ½ volt du côté de la sortie du régulateur.

6. Régulateur de tension selon l'une des revendications précédentes 1 à 3, **caractérisé en ce que** la tension du côté de la sortie (U2) est élevée jusqu'à ce que la tension du côté de l'entrée (U1) soit devenue inférieure à une valeur qui peut être prédéfinie, par exemple de 45 volts.

7. Régulateur de tension selon l'une des revendications précédentes, **caractérisé en ce que** la tension du côté de la sortie (U2) ne devient pas inférieure à une tension maximale pouvant être prédéfinie, cette tension maximale étant de préférence égale à 16 volts.

8. Régulateur de tension selon l'une des revendications précédentes, **caractérisé en ce qu'**une fois qu'aucun critère de réaction n'est plus présent, la tension de sortie (U2) du côté de la sortie du régulateur linéaire est de nouveau réduite à la valeur normale.

9. Régulateur de tension selon l'une des revendications précédentes, **caractérisé en ce que** le régulateur linéaire délivre des signaux de commande qui ouvrent ou ferment des commutateurs (51, 52) pouvant être prédéfinis et déconnectent ainsi les charges associées lorsque les critères correspondants sont remplis.

10. Régulateur de tension selon l'une des revendications précédentes, **caractérisé en ce que** le niveau de tension (U1) appliqué du côté de l'entrée se trouve dans une plage de 14 à 42 volts et le niveau de tension (U2) du côté de la sortie se trouve dans une plage de 14 volts.

11. Régulateur de tension selon l'une des revendications précédentes, **caractérisé en ce que** le niveau de tension (U1) appliqué du côté de l'entrée se trouve dans une plage de 28 à 42 volts et le niveau de tension (U2) du côté de la sortie se trouve dans une plage de 28 volts.

12. Régulateur de tension selon l'une des revendications précédentes, **caractérisé en ce que** le niveau de tension (U1) appliqué du côté de l'entrée se trouve dans une plage de 14 volts et le niveau de tension (U2) du côté de la sortie se trouve dans une plage de 42 volts.

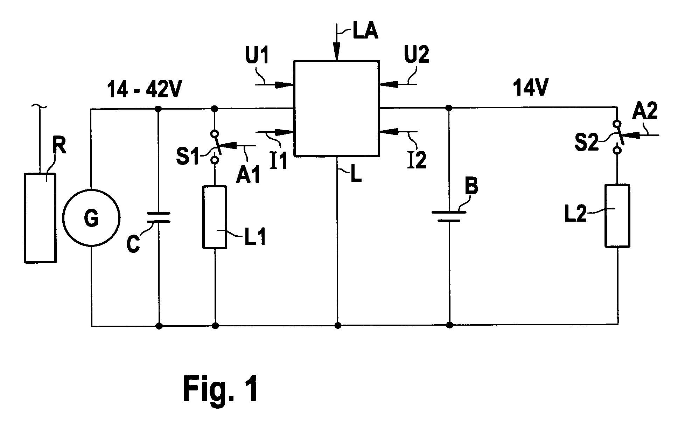

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE OS19859036 A
- DE OS10118846 A

- DE 10262000 A1